# EUROPÄISCHE PATENTANMELDUNG

(11) **EP 2 366 519 A1**
(43) Veröffentlichungstag der Anmeldung: **21.09.2011**
(21) Anmeldenummer: 11158788.7
(22) Anmeldetag: 18.03.2011
(51) Int. Cl.: B29C 33/04, B29C 45/73, B22D 17/22, C23C 4/00, C23C 24/04

(54) **Guss- oder Presswerkzeug mit Temperiermittelkanälen**

(30) Priorität: 18.03.2010 DE 102010003033
(71) Anmelder: Linde AG, 80331 München (DE); ISK GmbH, 58638 Iserlohn (DE); GWK Gesellschaft Wärme Kältetechnik mbH, 58566 Kierspe (DE)
(72) Erfinder: Heninger, Rolf, 85635 Höhenkirchen (DE); Praller, Andreas, 82110 Germering (DE); Krömmer, Werner, 84034 Landshut (DE); Kürten, Andreas, 58644 Iserlohn (DE); Peters, Guido, 51643 Gummersbach (DE)
(74) Vertreter: Kudlek & Grunert Patentanwälte

(57) **Zusammenfassung**

In einem Verfahren zur Herstellung eines Guss- oder Presswerkzeugs (1) oder -werkzeugeinsatzes (2) mit wenigstens einer Materialschicht (3, 5, 7) und mit in der wenigstens einen Materialschicht (3, 5, 7) angeordneten Temperiermittelkanälen (6) werden die Temperiermittelkanäle (6) in die wenigstens eine Materialschicht (3, 5, 7) unter Verwendung eines thermischen Spritzverfahrens (2) eingebracht.

## Beschreibung

Die vorliegende Erfindung betrifft ein Verfahren zur Herstellung eines Guss- oder Presswerkzeugs oder eines entsprechenden Werkzeugeinsatzes gemäß dem Oberbegriff von Patentanspruch 1, ein entsprechend hergestelltes Guss- oder Presswerkzeug oder einen entsprechend hergestellten Werkzeugeinsatz, eine Materialschicht eines derartigen Werkzeugs oder Werkzeugeinsatzes, sowie ein Guss- oder Pressverfahren unter Verwendung eines derartigen Werkzeugs oder Werkzeugeinsatzes.

### Beschreibung

Wenngleich die vorliegende Erfindung nachfolgend vornehmlich im Bezug auf den Spritzguss von Kunststoffteilen beschrieben wird, ist sie nicht hierauf beschränkt, sondern bei einer Vielzahl von Press- oder Gussverfahren einsetzbar, beispielsweise beim Leichtmetall-Druckguss von Aluminium, Magnesium oder Zink oder, alternativ zum Spritzguss, beim Pressen von Kunststoffteilen.

Insbesondere beim Spritzguss von Kunststoffteilen kann es erforderlich sein, bestimmte Werkzeugbereiche lokal zu erwärmen, beispielsweise um ein besseres Fließverhalten der Schmelze oder eine höhere Abbildegenauigkeit durch eine geringere Viskosität des Gussmaterials zu erzielen. Zu diesem Zweck ist bekannt, beheizbare Werkzeugeinsätze oder beheizbare Bereiche eines Spritzgusswerkzeugs vorzusehen.

Hierbei verwendbare Heizelemente können beispielweise in Sandwichbauweise hergestellt werden, wobei einzelne Schichten des Heizelements nacheinander in ein Spritzgusswerkzeug oder einen Werkzeugeinsatz eingebracht und verschraubt werden. In der Regel wird dabei zunächst, ausgehend von der Werkzeugseite und in Richtung der Gusskavität fortschreitend, eine erste elektrische Isolationsschicht, eine Heizschicht, eine zweite elektrische Isolationsschicht und abschließend eine, in der Regel metallische, Abschlussschicht (nachfolgend als "Metallschicht" bezeichnet) eingebracht. Die Isolationsschichten werden in der Regel aus keramischem Material hergestellt, bei der Heizschicht handelt es sich beispielsweise um einen keramischen oder metallischen elektrischen Widerstand oder um ein induktiv erwärmbares Element. Die Materialien für die Metallschicht werden in der Regel im Hinblick auf eine gute Bearbeitbarkeit ausgewählt.

Zur Herstellung von Beschichtungen sind thermische Spritzverfahren wie Flamm-, Plasma- und Kaltgasspritzen bekannt. Die entsprechende Herstellung von Heizschichten in Heizeinrichtungen für Komponenten von Spritzgusswerkzeugen ist in der DE 2005 018 062 B4 offenbart. Hierbei wird auf einem aus einem thermisch leitenden Material hergestellten Körper zunächst eine isolierende Basisschicht erstellt, auf die anschließend eine Schicht aus elektrisch leitendem Material als Widerstand in Form zumindest eines Streifens aufgebracht wird.

Die lokale Erwärmung eines Spritzgusswerkzeugs durch einen beheizbaren Einsatz führt naturgemäß dazu, dass die Kunststoffschmelze in diesem Bereich stärker erwärmt wird als in der Umgebung. Ehe ein durch Spritzguss hergestelltes Werkstück jedoch entformt werden kann, muss es überall seine Entformungstemperatur unterschritten haben, da anderenfalls eine unerwünschte Verformung durch die und nach der Entformung erfolgen könnte. Bereiche, die lokal zusätzlich erwärmt wurden, und die daher die Entformungstemperatur zu einem späteren Zeitpunkt erreichen, werden somit bestimmend für die Zykluszeit eines entsprechenden Spritzgussvorgangs und letztlich für die Wirtschaftlichkeit des Verfahrens.

Spritzgusswerkzeuge verfügen zur Abkühlung der erzeugten Formteile üblicherweise über Temperiermittelkanäle zur Kühlung mit Wasser oder Öl. Weil jedoch gerade in Bereichen mit einer zusätzlichen Heizeinrichtung, wie oben dargestellt, ein größerer Abstand zwischen diesen Temperiermittelkanälen und der Werkzeugoberfläche als in anderen Bereichen besteht, wird die thermische Leitung und damit die Abkühlgeschwindigkeit herabgesetzt. Jedoch besteht gerade in diesem Bereich ein erhöhter Kühlbedarf. Die allgemeine Forderung bei der Erstellung von Spritzgusswerkzeugen, gemäß derer stets bestimmte Abstände von Temperiermittelkanälen zueinander und zur Kavitätenoberfläche einzuhalten sind, kann daher in Spritzgusswerkzeugen mit beheizbaren Werkzeugeinsätzen nicht immer erfüllt werden.

Zur effizienten Kühlung von Spritzgusswerkzeugen, insbesondere in sensiblen Bereichen (sogenannten "Hot Spots", in denen örtliche Temperaturspitzen auftreten können) ist aus der DE 199 18 428 C1 ein Verfahren zur Kühlung mit Kohlendioxid bekannt, bei dem über ein Zuleitungssystem in Form von Temperiermittelkanälen unter Druck befindliches Kohlendioxid in hierfür vorgesehene Werkzeugbereiche geleitet wird, um diese Bereiche durch eine gezielte Expansion des Kohlendioxids zu kühlen. Durch dieses Verfahren kann eine sehr wirkungsvolle Kühlleistung erzielt werden, der Abstand zwischen den Temperiermittelkanälen und der Werkzeugkavität wird jedoch auch durch Verwendung einer Kohlendioxidkühlung nicht verringert.

Ein generelles Problem bei erwärmten und anschließend abgekühlten Bauteilen besteht in beträchtlichen mechanischen und thermischen Spannungen, die beispielsweise durch unterschiedliche Wärmeausdehnungskoeffizienten bedingt sind. Bei sehr großen Temperaturunterschieden, wie sie beispielsweise bei der Verwendung einer Kohlendioxidkühlung auftreten, werden diese Probleme signifikant verstärkt. Insbesondere treten derartige Nachteile bei Heizelementen in Sandwichbauweise auf. Um diese Nachteile zu überwinden, müssen entsprechende Werkstoffe sorgfältig ausgewählt sowie hohe Fertigungsgenauigkeiten eingehalten werden. Beide Anforderungen erhöhen die Produktionskosten entsprechender Heizsysteme signifikant.

Es besteht daher ein Bedarf nach Guss- oder Presswerkzeugen oder -werkzeugeinsätzen mit in Materialschichten eingebrachten Temperiermittelkanälen, die mittels kostengünstiger Verfahren und/oder Werkstoffe möglichst einfach hergestellt werden können.

### Offenbarung der Erfindung

Vor diesem Hintergrund stellt die vorliegende Erfindung ein Verfahren zur Herstellung eines Guss- oder Presswerkzeugs oder -werkzeugeinsatzes mit wenigstens einer Materialschicht und mit in der wenigstens einen Materialschicht angeordneten Temperiermittelkanälen, ein durch das Verfahren hergestelltes Guss- oder Presswerkzeug oder einen entsprechenden Werkzeugeinsatz, eine Materialschicht eines derartigen Werkzeugs oder Werkzeugeinsatzes sowie ein Guss- oder Pressverfahren unter Verwendung entsprechender Werkzeuge oder Werkzeugeinsätze mit den Merkmalen der unabhängigen Patentansprüche bereit. Bevorzugte Ausgestaltungen sind Gegenstand der Unteransprüche sowie der nachfolgenden Beschreibung.

Erfindungsgemäß werden die Temperiermittelkanäle in wenigstens eine Materialschicht unter Verwendung eines thermischen Spritzverfahrens eingebracht. Insbesondere unter Berücksichtigung der zuvor genannten Anforderungen erweist sich ein derartiges thermisches Spritzverfahren als besonders vorteilhaft. So spricht für das Herstellen der einzelnen Lagen durch thermisches Spritzen insbesondere die Tatsache, dass hierbei keine nachteiligen Fertigungstoleranzen zum Tragen kommen und ein vollflächiger und dichter Verbund hergestellt werden kann. Dies trifft insbesondere dann zu, wenn eine zusätzliche Haftschicht ("Bondcoat") zwischen den einzelnen Schichten und an der Grenze zwischen Substrat und Schicht eingebracht wird, wodurch eine effektive Haftung erzielt werden kann. Hierdurch kann eine entsprechende Schicht vollständig thermisch gespritzt werden, es sind also nicht mehrere unterschiedliche Arbeitsschritte mehr erforderlich.

Thermische Spritzverfahren, wie Flamm-, Plasma- und Kaltgasspritzen sind zur Herstellung von Beschichtungen prinzipiell bekannt. Beim Flammspritzen wird ein pulver-, schnur-, stab- oder drahtförmiger Beschichtungswerkstoff in einer Brenngasflamme erhitzt und unter Zufuhr zusätzlichen Fluids, beispielsweise von Druckluft, mit hoher Geschwindigkeit auf einen Grundwerkstoff gespritzt. Beim Plasmaspritzen wird in einem Plasmajet Pulver eingedüst, welches durch die hohe Plasmatemperatur aufgeschmolzen wird. Der Plasmastrom reißt die Pulverteilchen mit und schleudert sie auf das zu beschichtende Werkstück. Beim Kaltgasspritzen wie es beispielsweise in der EP 04 84 533 B1 beschrieben ist, werden die Spritzpartikel in einem Prozessgas auf hohe Geschwindigkeit beschleunigt. Die Temperatur des Prozessgases wird so gewählt, dass die gespritzten Partikel zwar gegebenenfalls erwärmt werden, jedoch nicht schmelzen. Die Beschichtung wird mit dem Auftreffen der Partikel auf dem Beschichtungssubstrat mit hoher kinetischer Energie gebildet, wobei die Partikel, die in dem Prozessgas nicht aufschmelzen, beim Aufprall eine besonders dichte, homogene und fest haftende Schicht bilden.

Durch die genannten thermischen Spritzverfahren lassen sich signifikant verbesserte Eigenschaften von Beschichtungen und Werkstoffen erzielen. Die entsprechend hergestellten Produkte weisen eine erhöhte Verschleißbeständigkeit und Korrosionsbeständigkeit auf. Durch die Auswahl geeigneter Komponenten kann eine besonders gute thermische und/oder elektrische Leitfähigkeit und/oder ein besonders vorteilhaftes Ausdehnungsverhalten entsprechender Komponenten erzielt werden.

Die Erfindung liefert daher ein besonders flexibles und kostengünstiges Verfahren, mit welchem Temperiermittelkanäle in Materialschichten von Guss- oder Presswerkzeugen oder -werkzeugeinsätzen mit besonders vorteilhaften Eigenschaften hergestellt werden können.

Durch das erfindungsgemäße Verfahren wird eine einfache, schnelle und flexible Erstellung von Werkzeugen und Werkzeugeinsätzen möglich, welche effizienter eingesetzt werden können und eine höhere Standzeit aufweisen. Insbesondere in Systemen mit Kohlendioxidkühlung wird durch die erfindungsgemäße Einbringung von Temperiermittelkanälen eine nochmalige Verbesserung der Kühleigenschaften bewirkt.

Durch das erfindungsgemäße Verfahren lassen sich insbesondere auch Freiformheizungen mit entsprechend angeordneten Temperiermittelkanälen erstellen. Im Gegensatz dazu können bisher insbesondere keramische Heizungen in der Regel nur als flache (zweidimensionale) Körper hergestellt werden, mit denen beispielsweise gewölbte Flächen angenähert werden müssen. Die Auskleidung von konkaven Gusskavitäten mit Heizelementen erfolgt also herkömmlicherweise in Form flacher "Kacheln", wohingegen mit einem Spritzverfahren eine direkte Nachbildung der konkaven Form ermöglicht wird.

Die Temperiermittelkanäle können sowohl in beheizte als auch in nicht beheizte Presswerkzeuge eingebracht werden. Die Einbringung der erfindungsgemäß hergestellten Temperiermittelkanäle kann zusätzlich zu weiteren, insbesondere konventionellen Kühlsystemen erfolgen.

Die erfindungsgemäß hergestellten Temperiermittelkanäle können, wie zuvor erläutert, mit besonderem Vorteil zur Kühlung eines Werkzeugs verwendet werden, also als Kühlmittelkanäle dienen. Ebenso können derartige Temperiermittelkanäle jedoch auch zur Erwärmung des Werkzeugs eingesetzt werden, indem anstelle des Kühlmittels ein heißes Medium, z.B. gasförmiges Kohlendioxid, durch die Kanäle geleitet wird. In letzterem Fall kann ein Werkzeug auch ohne Verwendung einer elektrischen Heizung wirksam erwärmt werden, jedoch können Temperiermittelkanäle auch zur Unterstützung einer vorhandenen elektrischen Heizung dienen. Ferner kann mit besonderem Vorteil durch entsprechende Temperiermittelkanäle ein Werkzeug zunächst durch ein heißes Medium erhitzt und anschließend durch ein kaltes Medium abgekühlt werden. Hierzu können getrennte Heiz- und Kühlkanäle verwendet werden, oder solche mit Doppelfunktion. Im letzteren Fall kann der apparative Aufwand bei Herstellung und Betrieb eines entsprechenden Werkzeugs signifikant verringert werden. Es ist auch möglich, Temperiermittelkanäle oder deren Wände mit bestimmten Widerstandseigenschaften auszustatten, so dass durch Anlegen einer Spannung eine elektroresistive Erwärmung bewirkt werden kann.

Das Verfahren kann vorteilhafterweise in Systemen sehr unterschiedlicher Konfiguration verwendet werden. So kann in einen Werkzeugeinsatz zur lokalen Erwärmung von entsprechenden Bereichen zunächst wenigstens eine Isolierschicht, auf diese wenigstens eine Heizschicht und anschließend eine erneute Isolierschicht eingebracht werden. Die letzte Isolierschicht wird anschließend mit einer Metallschicht, die zu der Gusskavität weist, abgedeckt. Die Metallschicht kann anschließend poliert oder anderweitig bearbeitet werden.

Andererseits kann der Schichtaufbau auch in einzelnen Bereichen eines Werkzeugeinsatzes in unterschiedlicher Weise erfolgen. So kann eine Heizschicht auch beispielsweise nur in bestimmten zu erwärmenden Bereichen vorgesehen sein. Mit besonderem Vorteil lassen sich eine oder mehrere der genannten Schichten durch thermische Spritzverfahren einbringen. Insbesondere können auch die elektrischen Anschlüsse einer Heizschicht im Rahmen des Schichtaufbaus durch Spritzverfahren eingebracht werden. Beispielsweise kann ein Heizelement auch in einen entsprechenden Werkzeugeinsatz eingelegt, die Anschlüsse hingegen durch ein Spritzverfahren erstellt werden.

Die Temperiermittelkanäle können in eine Isolierschicht, eine Metallschicht, eine Heizschicht oder in mehrere dieser Schichten eingebracht werden. Liegen die Temperiermittelkanäle in einer Metallschicht oder bestehen diese aus Metall, kann eine elektrische Isolierung von Vorteil sein. Naturgemäß wird eine Heizschicht eines Schichtaufbaus am stärksten erwärmt. Kann diese Heizschicht effektiv abgekühlt werden, beispielsweise durch in einer benachbarten Isolierschicht angeordnete Temperiermittelkanäle, wird eine besonders effiziente Kühlung bewirkt. Werden die Temperiermittelkanäle hingegen näher zur Gusskavität hin, also beispielsweise in einer entsprechenden Metallschicht, angeordnet, so kann eine besonders effektive und dynamische Kühlung erzielt werden, die bewirkt, dass das Gussteil nur eine minimale Zeit einer erhöhten Temperatur ausgesetzt ist. Somit ist die Form des Werkzeugs nicht mehr ausschließlich für die Effektivität der Kühlung verantwortlich.

Vorteilhafterweise können die Temperiermittelkanäle wenigstens teilweise unter Verwendung einer verlorenen Form in die jeweilige Materialschicht eingebracht werden. Hierzu wird, gewissermaßen als Platzhalter für die Kanäle sowie gegebenenfalls für entsprechende Verteiler- und Sammelsysteme, Vollmaterial auf eine darunter liegende Schicht aufgebracht und fixiert. Die Fixierung kann hierbei beispielsweise durch Kleben erfolgen, jedoch kann eine entsprechende verlorene Form wiederum selbst durch ein geeignetes Spritzverfahren, beispielsweise durch Kaltgasspritzen und unter Verwendung einer Matrize, aufgebracht werden. Die äußeren Konturen des Formmaterials entsprechen genau den Abmessungen der späteren Kühlkanäle.

Dabei ist es von Vorteil, wenn die Kontur keine Hinterschneidung aufweist, die beim Spritzen möglicherweise nicht komplett erreicht werden kann. Als ideal ist in diesem Zusammenhang z.B. ein halbkreisförmiges Profil anzusehen. Nach Aufbringen der Form wird diese mittels des thermischen Spritzverfahrens umspritzt. Nach diesem Schritt bzw. nach Fertigung eines entsprechenden Werkzeugeinsatzes, muss das Formmaterial aus dem Werkzeugeinsatz herausgelöst werden. Hierzu kommen beispielsweise physikalisch-thermische (Ausschmelzen durch Erhitzen) oder chemische Verfahren (Herauslösen durch Säuren, Laugen oder Lösungsmittel) in Frage. Geeignete Materialen für entsprechende Formen müssen daher einerseits Eigenschaften aufweisen, die in der Lage sind, den Belastungen des thermischen Spritzens (mechanische und thermische Beanspruchung) standzuhalten, sich andererseits jedoch gut herauslösen lassen.

Wird ein Ausschmelzverfahren für eine verlorene Form verwendet, kommen als Formmaterialien beispielsweise Zink oder Zinn oder bestimmte Kunststoffe und Kunstharze in Frage, für chemische Verfahren können säurelösliche Materialien, z.B. bestimmte Metalle, verwendet werden.

Durch die Verwendung einer verlorenen Form können Temperiermittelkanäle mit Kanalwänden erzeugt werden, welche dem Umgebungsmaterial entsprechen. Mögliche negative Effekte unterschiedlicher Ausdehnungskoeffizienten können hierdurch vollständig vermieden werden.

In bestimmten Fällen kann es sich auch als vorteilhaft erweisen, Temperiermittelkanäle wenigstens teilweise durch Umspritzen von (vorgefertigten) Kanalelementen einzubringen. Hierzu können beispielsweise, ggf. schon fest mit einem Verteiler- und Sammelsystem verbundene, Temperiermittelkanäle auf eine darunterliegende Schicht, also eine Unterlage, aufgebracht und dort fixiert werden. Die entsprechend fixierten Kanäle werden anschließend umspritzt. Derartige Temperiermittelkanäle verbleiben später unverändert in dem Werkzeugeinsatz. Mit besonderem Vorteil können hierdurch die Wandeigenschaften entsprechender Temperiermittelkanäle abweichend vom Umgebungsmaterial ausgewählt werden. Beispielsweise kann damit eine besonders gute Druckfestigkeit oder thermische Belastbarkeit von Temperiermittelkanalwänden erzielt werden.

In beiden Fällen ist es möglich, entsprechend hergestellte Temperiermittelkanäle durch nachfolgende Auskleidungsverfahren mit Oberflächenbeschichtungen zu versehen.

Mit besonderem Vorteil kann auch ein Temperiermittelverteil- und/oder Sammelsystem in Verbindung mit dem Temperiermittelkanälen durch das Spritzverfahren eingebracht werden. Hierdurch kann sehr einfach ein Werkzeugeinsatz bzw. ein entsprechendes Press- oder Gusswerkzeug erzeugt werden, das im Idealfall anschließend lediglich an einen Einlass und Auslass eines Temperiermittelsystems oder - kreislaufs angeschlossen werden muss.

Bezüglich der erfindungsgemäß ebenfalls vorgesehenen Guss-oder Presswerkzeuge oder -werkzeugeinsätze, der Materialschichten entsprechender Werkzeuge oder Werkzeugeinsätze sowie des erfindungsgemäßen Guss- oder Pressverfahrens sei auf die zuvor erläuterten Vorteile und Merkmale ausdrücklich verwiesen.

Durch derartige Vorrichtungen und Verfahren kann eine signifikante Steigerung in der Produktivität von Spritzguss-und -prägeverfahren erzielt werden, da hiermit ein schnelles und auch gleichmäßiges Abkühlen (und gegebenenfalls auch Erwärmen) des eingespritzen Werkstoffs in der Form möglich ist. Die Zeit bis zur Entformung einer gespritzten oder geprägten Komponente wird hierdurch deutlich verringert, so dass die Zykluszeit einer entsprechenden Anlage reduziert werden kann.

### Figuren

Die Erfindung und ihre Vorteile sowie weitere Ausgestaltungen der Erfindung werden im Folgenden anhand der in den Figuren dargestellten Ausführungsbeispiele näher erläutert. Im Einzelnen zeigt:
- Figur 1: ein Guss- oder Presswerkzeug mit einem Werkzeugeinsatz gemäß einer besonders bevorzugten Ausführungsform der Erfindung und
- Figur 2: ein Guss- oder Presswerkzeug mit einem Werkzeugeinsatz gemäß einer weiteren bevorzugten Ausführungsform der Erfindung.

In den Figuren sind gleiche oder gleichartige Elemente mit identischen Bezugszeichen angegeben. Auf eine wiederholte Erläuterung wird der Übersichtlichkeit halber verzichtet.

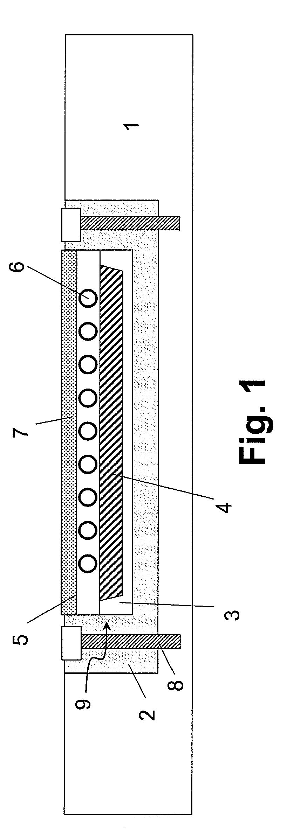

In Figur 1 ist ein Teil eines Guss- oder Presswerkzeugs 1 einer Press- oder Spritzeinrichtung schematisch dargestellt. Das Werkzeug 1 weist einen Werkzeugeinsatz 2 auf, der mit Schrauben 8 an dem Werkzeug 1 befestigt ist. Der Werkzeugeinsatz 2 weist eine Schichtstruktur 9 auf, die nachfolgend erläutert wird.

Die Schichtstruktur 9 weist auf der Substratseite ein Isoliermaterial 3 auf. Das Isoliermaterial 3, das an seinen seitlichen Rändern nach oben gezogen ist, um auch eine seitliche Isolation zu gewährleisten, wird vorteilhafterweise durch ein Spritzverfahren aufgebracht oder in einen Werkzeugeinsatz eingelegt. Vorteilhafterweise wird für die Isolierschicht 3 ein Keramikmaterial verwendet. Auf die Isolierschicht 3 aufgelegt, aufgespritzt oder anderweitig eingebracht ist eine Heizschicht 4 vorgesehen, beispielsweise eine elektroresistive oder induktive Heizung 4. Die Heizschicht 4 kann (nicht dargestellte) elektrische Anschlüsse aufweisen, die ebenfalls durch ein Spritzverfahren erstellt werden können. Die Heizschicht 4 ist mit einer weiteren Isolierschicht 5 bedeckt. In dieser weiteren Isolierschicht 5 sind Temperiermittelkanäle 6 eingebracht. Wie zuvor erläutert, kann die Einbringung der Temperiermittelkanäle unter Verwendung einer verlorenen Form oder durch Umspritzen vorgefertigter Temperiermittelkanalelemente erfolgen.

Vorteilhafterweise, jedoch in der Figur nicht dargestellt, kann zusätzlich ein entsprechendes Temperiermittelverteil-oder -sammelsystem zusammen mit den Temperiermittelkanälen 6, das heißt ebenfalls in der Isolierschicht 5, eingebracht werden. Falls zweckmäßig, kann das Temperiermittelverteil-oder -sammelsystem auch in anderen Schichten oder in dem Werkzeug selbst vorgesehen sein.

Zur Bereitstellung der Temperiermittelkanäle 6 kann beispielsweise zunächst eine erste Schicht einer Isolierschicht 5 auf die Heizschicht 4 bzw. die seitlich hochgezogenen Bereiche der ersten Isolierschicht 3 aufgebracht werden, um eine heizschichtseitige Wand der Temperiermittelkanäle 6 zu erzeugen. Anschließend wird, wie oben erläutert, eine Form eingebracht oder es werden vorgefertigte Temperiermittelkanalelemente auf der zuvor eingebrachten ersten Isolierschicht fixiert. Die eingebrachten Temperiermittelkanäle oder die aufgebrachte Form wird anschließend durch weiteres Isolierschichtmaterial umspritzt.

Abschließend erfolgt die Aufbringung einer weiteren Materialschicht 7, beispielsweise einer bearbeitbaren, gut wärmeleitfähigen Metallschicht 7 an der Werkzeugfläche.

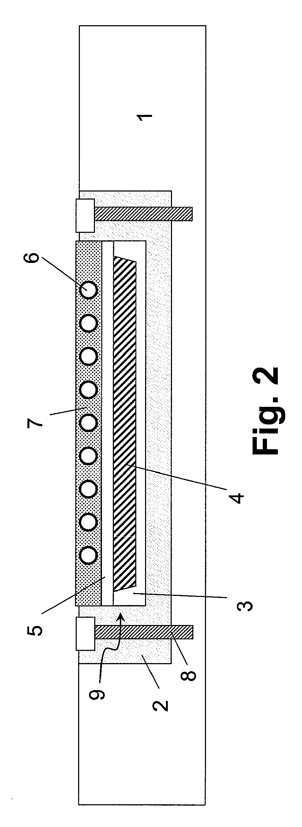

In Figur 2 ist ebenfalls ein Tei eines entsprechenden Guss-oder Presswerkzeugs 1 dargestellt, welches einen Werkzeugeinsatz 2 aufweist. Abweichend zu Figur 1 sind hier jedoch die Temperiermittelkanäle 6 in die abschließende Metallschicht 7 an der Werkzeugoberfläche eingebracht.

Es versteht sich, dass wenngleich in den Figuren 1 und 2 Werkzeuge 1 mit Werkzeugeinsätzen 2 gezeigt sind, die erfindungsgemäße Schichtstruktur mit Temperierelementen auch direkt auf eine Werkzeugoberfläche, das heißt auf ein Werkzeug ohne Werkzeugeinsatz aufgebracht werden kann.

## Patentansprüche

1. Verfahren zur Herstellung eines Guss- oder Presswerkzeugs (1) oder -werkzeugeinsatzes (2) mit wenigstens einer Materialschicht (3, 5, 7) und mit in der wenigstens einen Materialschicht (3, 5, 7) angeordneten Temperiermittelkanälen (6), **dadurch gekennzeichnet, dass** die Temperiermittelkanäle (6) in die wenigstens eine Materialschicht (3, 5, 7) unter Verwendung eines thermischen Spritzverfahrens (2) eingebracht werden.

2. Verfahren nach Anspruch 1, **dadurch gekennzeichnet, dass** als thermisches Spritzverfahren Plasmaspritzen, Flammspritzen oder Kaltgasspritzen verwendet wird.

3. Verfahren nach Anspruch 1 oder 2, **dadurch gekennzeichnet, dass** wenigstens eine Isolierschicht (3, 5), wenigstens eine Heizschicht (4) und/oder wenigstens eine Metallschicht (7) als Materialschicht eingebracht wird.

4. Verfahren nach einem der vorstehenden Ansprüche, **dadurch gekennzeichnet, dass** die Temperiermittelkanäle (6) wenigstens teilweise unter Verwendung einer verlorenen Form eingebracht werden.

5. Verfahren nach Anspruch 4, **dadurch gekennzeichnet, dass** die verlorene Form unter Verwendung eines ausschmelzbaren und/oder herauslösbaren Werkstoffs bereitgestellt wird.

6. Verfahren nach einem der vorstehenden Ansprüche, **dadurch gekennzeichnet, dass** die Temperiermittelkanäle (6) wenigstens teilweise durch Umspritzen von Kanalelementen eingebracht werden.

7. Verfahren nach Anspruch 6, **dadurch gekennzeichnet, dass** als Kanalelemente vorgefertige und/oder auf eine Unterlage aufgebrachte Kanalelemente verwendet werden.

8. Verfahren nach einem der vorstehenden Ansprüche, **dadurch gekennzeichnet, dass** ferner ein Temperiermittelverteil- und/oder -sammelsystem in Verbindung zu den Temperiermittelkanälen (6) eingebracht wird.

9. Guss- oder Presswerkzeug (1) oder -werkzeugeinsatz (2) mit wenigstens einer Materialschicht (3, 5, 7) und mit in wenigstens einer Materialschicht (3, 5, 7) angeordneten Temperiermittelkanälen (6), das bzw. der durch ein Verfahren gemäß einem der vorstehenden Patentansprüche hergestellt ist.

10. Materialschicht (3, 5, 7) mit darin angeordneten Temperiermittelkanälen (6) eines Guss- oder Presswerkzeugs (1) oder -werkzeugeinsatzes (2) gemäß Patentanspruch 9.

11. Guss- oder Presswerkzeug (1) oder -werkzeugeinsatz (2) gemäß Patentanspruch 9 oder Materialschicht (3, 5, 7) gemäß Patentanspruch 10, mit Temperiermittelkanälen (6), die als Kühl- und/oder Heizkanäle, insbesondere zur Kühlung und/oder Erwärmung mittels Kohlendioxid, ausgebildet sind.

12. Guss- oder Pressverfahren unter Verwendung eines Guss-oder Presswerkzeugs (1) oder -werkzeugeinsatzes (2) oder einer Materialschicht (3, 5, 7) gemäß einem der vorstehenden Ansprüche.
